# EUROPÄISCHE PATENTSCHRIFT

(11) **EP 1 516 758 B1**
(45) Veröffentlichungstag und Bekanntmachung des Hinweises auf die Patenterteilung: **10.10.2007**
(21) Anmeldenummer: 04021344.9
(22) Anmeldetag: 08.09.2004
(51) Int. Cl.: B60H 1/00

(54) **Klappenanordnung**
Assembly of damper doors
Agencement de clapets d'air

(30) Priorität: 17.09.2003 DE 10343241
(43) Veröffentlichungstag der Anmeldung: 23.03.2005
(73) Patentinhaber: Behr GmbH & Co. KG, 70469 Stuttgart (DE)
(72) Erfinder: Komowski, Michael, 71265 Weil der Stadt (DE); Koukouravas, Evripidis, 72654 Neckartenzlingen (DE)

(56) Entgegenhaltungen:
- WO-A-02/12007
- DE-A- 19 832 337
- PATENT ABSTRACTS OF JAPAN Bd. 1998, Nr. 01, 30. Januar 1998 (1998-01-30) -& JP 09 226348 A (MITSUBISHI HEAVY IND LTD), 2. September 1997 (1997-09-02)
- PATENT ABSTRACTS OF JAPAN Bd. 008, Nr. 054 (M-282), 10. März 1984 (1984-03-10) -& JP 58 206411 A (NISSAN JIDOSHA KK), 1. Dezember 1983 (1983-12-01)

## Beschreibung

Die Erfindung betrifft eine Klappenanordnung, insbesondere für ein Belüftungssystem eines Kraftfahrzeugs, gemäß dem Oberbegriff des Anspruchs 1, wie sie z.B. in WO 02/12007 A1 offenbart ist.

Häufig ist eine möglichst lineare Luftmengenregelung der Stauluft erwünscht. Hierfür sind gemäß dem Stand der Technik zwei oder mehr parallel zueinander angeordneter Klappen als Absperrvorrichtung vorgesehen, welche mittels einer Kinematik gesteuert werden, welche recht aufwendig ist. Nachteilig hierbei ist unter anderem, dass die Klappen sowie die Klappenanschläge, d.h. Stege zwischen den Klappen, den freien Querschnitt auch in der Stellung "Auf" verringern.

Es ist Aufgabe der Erfindung, eine verbesserte Klappenanordnung zur Verfügung zu stellen, die möglichst ohne aufwendige Kinematik und ohne wesentliche Querschnittsverluste eine nicht lineare Regelung in eine lineare Regelung der Stauluft umwandeln kann.

Diese Aufgabe wird gelöst durch eine Klappenanordnung mit den Merkmalen des Anspruchs 1. Vorteilhafte Ausgestaltungen sind Gegenstand der Unteransprüche.

Erfindungsgemäß ist eine Klappenanordnung, insbesondere für ein Belüftungssystem eines Kraftfahrzeugs, welche mindestens zwei Klappen aufweist, vorgesehen, wobei die Klappen einen Bereich in Form eines Hohlzylindersektors aufweisen und eine Klappe innerhalb von der anderen Klappe angeordnet ist. Eine derartige Klappenanordnung ist einfach zu steuern und weist geringe Strömungsverluste auf und die Klappenanordnung weist auch in Hinblick auf Geräusche gute Eigenschaften auf. Bevorzugt haben die beiden Klappen die gleiche Schwenkachse, jedoch können die Schwenkachsen auch beabstandet voneinander, insbesondere parallel zueinander, angeordnet sein.

In der inneren Klappe ist mindestens eine Öffnung vorgesehen. Um einen möglichst linearen Strömungsverlauf zu erhalten, ist die Öffnung entsprechend ausgebildet. Die Öffnung weist hierfür eine kurvenförmige, vorzugsweise zwei kurvenförmige Seiten, auf, oder es sind zwei Öffnungen mit je einer kurvenförmigen Seite vorgesehen, deren Mittelpunkte etwa zusammenfallen und im äußeren Bereich - in Umfangsrichtung gesehen und mittig in Längsrichtung gesehen - des Hohlzylindersektors angeordnet sind. Zur Erhöhung der Stabilität kann auch in der Öffnung ein Gitter vorgesehen sein oder die Klappe durch eine Mehrzahl entsprechend angeordneter Öffnungen gebildet sein. Für eine einfache Näherung an einen linearen Strömungsverlauf können die kurvenförmigen Seiten kreisbogenförmig ausgebildet sein.

Vorzugsweise ist zur Erhöhung der Stabilität eine Welle vorgesehen, die quer durch die innere Klappe verläuft und fest mit derselben verbunden ist, wobei die Welle in der Schwenkachse angeordnet ist. Dabei dient die Welle vorzugsweise auch dem Antrieb.

Die äußere Klappe ist vorzugsweise auf der Welle oder an in der Schwenkachse angeordneten Zapfen an der inneren Klappe gelagert. Dies ermöglicht einen einfachen Aufbau bei geringem Bauraum.

Im Falle von unterschiedlichen Schwenkachsen kann die äußere Klappe auf einer Welle oder an Zapfen gelagert sein, welche nicht auf der Schwenkachse der inneren Klappe liegen.

Gemäß einer besonders kostengünstigen Ausführungsform weist die äußere Klappe einen in Umfangsrichtung größeren Hohlzylindersecktor auf als die innere Klappe, so dass die äußere Klappe zwei Strömungskanäle wechselseitig verschließen kann.

Alternativ kann die Klappenanordnung mit einer herkömmlichen Klappe zusammenwirken, welche einen der Strömungskanäle verschließt.

Eine derartige Klappenanordnung wird bevorzugt in einem Belüftungssystem oder einer Klimaanlage eines Kraftfahrzeugs verwendet, wobei insbesondere die Frischluftzufuhr und/oder Umluftzufuhr mit der Klappenanordnung geregelt wird.

Im Folgenden wird die Erfindung anhand von drei Ausführungsbeispielen unter Bezugnahme auf die Zeichnung im Einzelnen erläutert. In der Zeichnung zeigen:
- Fig. 1a-e: verschiedene Stellungen einer Klappenanordnung gemäß dem ersten Ausführungsbeispiel mit nur teilweise dargestelltem Gehäuse,
- Fig. 2: eine Ansicht von zwei Klappen des ersten Ausführungsbeispiels,
- Fig. 3: eine Ansicht der inneren Klappe des ersten Ausführungsbeispiels,
- Fig. 4: einen Schnitt durch die Klappenanordnung gemäß dem ersten Ausführungsbeispiel,
- Fig. 5: eine Ansicht der Klappenanordnung gemäß dem zweiten Ausführungsbeispiel,
- Fig. 6: einen Schnitt durch eine Klappenanordnung gemäß dem dritten Ausführungsbeispiel, und
- Fig. 7: eine Ansicht der inneren Klappe des zweiten und dritten Ausführungsbeispiels.

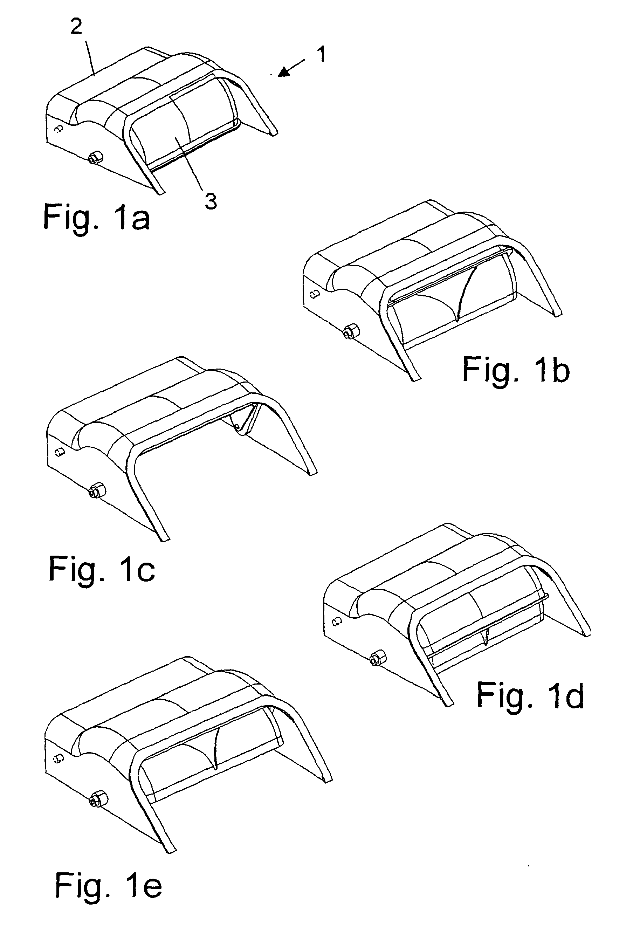

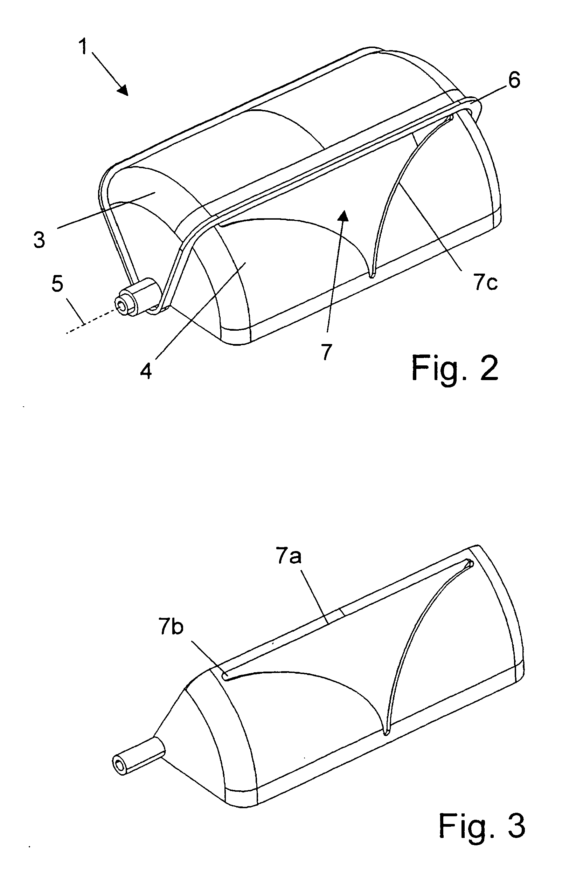

Die Figuren 1a bis 1e zeigen eine Klappenanordnung 1 im eingebauten Zustand, wobei nur ein Teil des Gehäuses 2 dargestellt ist. Wie insbesondere Fig. 2 zu entnehmen ist, umfasst die Klappenanordnung 1 zwei koaxial zueinander angeordnete Klappen 3 und 4, wobei die beiden Klappen 3 und 4 gegeneinander um eine Schwenkachse 5 verschwenkbar sind. Die beiden Klappen 3 und 4 weisen auf beiden Seiten einen senkrecht zur Schwenkachse 5 kreissektorartigen Bereich und zwischen diesem kreissektorartigen Bereich einen Zylindermantel Bereich auf, wobei die Übergänge abgerundet sind. Auf Grund dieser Ausgestaltung werden die Klappen 3 und 4 im Folgenden auch als Schaufelklappen bezeichnet.

An der äußeren Klappe 3 ist ein umlaufender, in axialer und radialer Richtung nach außen gezogener Rand 6 vorgesehen, welcher zur Erhöhung der Stabilität und zur Abdichtung gegenüber dem Gehäuse 2 dient.

Die innere Klappe 4 weist eine Öffnung 7 auf (siehe Fig. 3), welche auf ihrer einen Seite 7a in Längsrichtung der Schwenkachse 5 verläuft. Von den Enden, im Folgenden als Ecken 7b bezeichnet, der Seite 7a aus verläuft die Öffnung 7 kreisbogenförmig zur Mitte der anderen Längsseite der Klappe 4, wo die beiden kreisbogenförmigen Seiten 7c in einem spitzen Winkel im dritten Eck 7b zusammentreffen. Die drei Ecken 7b der Öffnung 7 sind hierbei mit Radien versehen.

Die Funktion der Klappenanordnung 1 ist Folgende: Zum Verschließen eines Strömungskanals ist die äußere Klappe 3 und auch die innere Klappe 4 geschlossen (Fig. 1a). Soll ein linearer Strömungsverlauf erzeugt werden, so wird die äußere Klappe 3 bei geschlossener innerer Klappe 4 geöffnet (Fig. 1b). Soll die Klappenanordnung 1 vollständig geöffnet werden, so werden beide Klappen 3 und 4 vollständig geöffnet (Fig. 1c). Hierbei erfolgt die Steuerung derart, dass bei Zwischenstellungen die innere Klappe 4 erst bei vollständig geöffneter äußerer Klappe 3 geöffnet wird (siehe Fig. 1d und 1e).

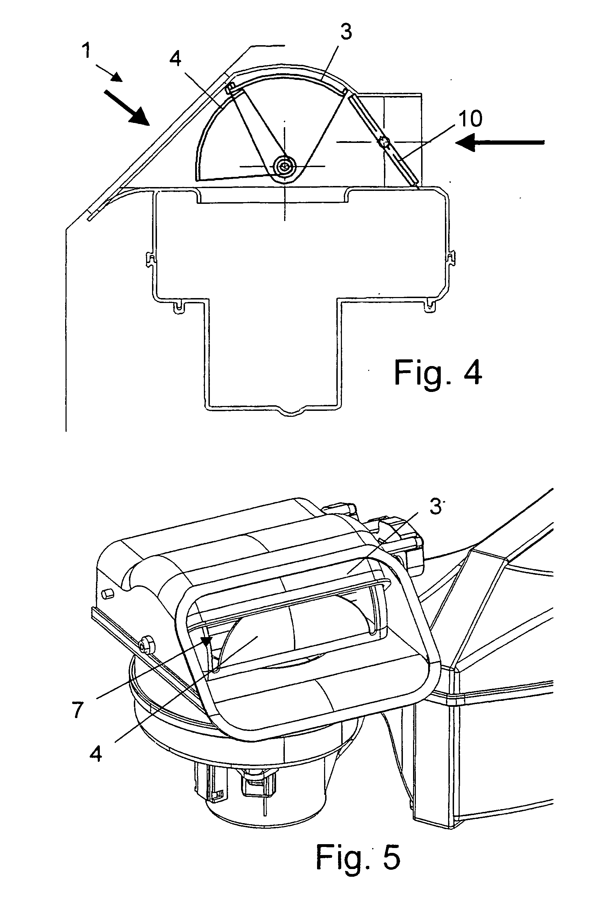

Fig. 4 zeigt einen Schnitt durch eine Klappenanordnung 1 im eingebauten Zustand. Hierbei erfolgt die Frischluftzufuhr von links, die Umluftzufuhr von rechts, jeweils durch Pfeile angedeutet. Wie aus Fig. 4 ersichtlich ist, wirkt die Klappenanordnung 1 mit einer herkömmlichen Klappe 10 zusammen, welche in der dargestellten Stellung keine Umluft durchlässt. In der dargestellten Stellung ist die Frischluftzufuhr geöffnet, wobei die innere Klappe 4 geschlossen ist, so dass eine Linearisierung der Luftströmung erfolgt. Die äußere Klappe 3 befindet sich außerhalb des Einströmquerschnitts und hat daher keine negativen Einwirkungen auf die Luftmenge.

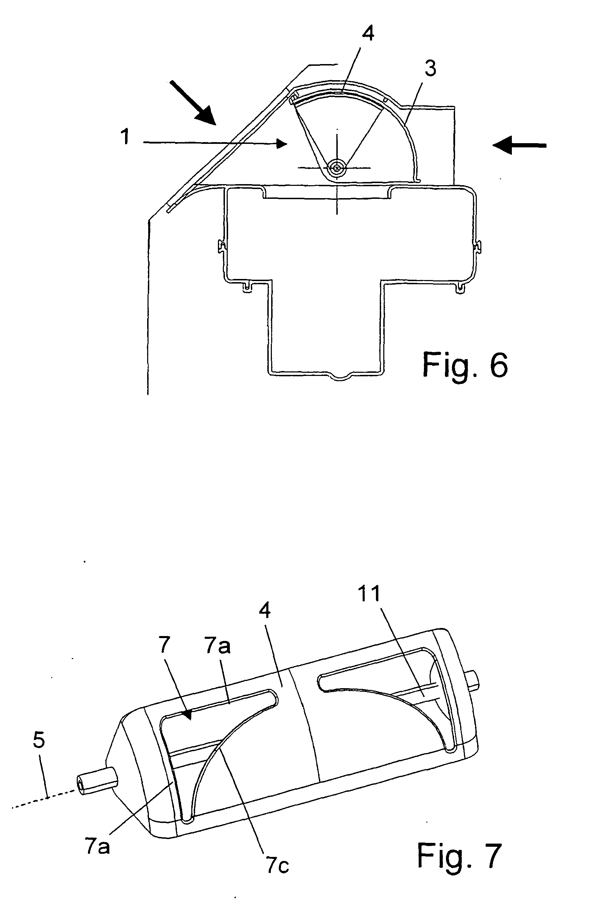

Die Fig. 5 zeigt ein zweites Ausführungsbeispiel, das in Hinblick auf die Klappenanordnung und deren Funktion im Wesentlichen dem ersten Ausführungsbeispiel entspricht. Einziger Unterschied ist die Öffnung 7 der inneren Klappe 4, welche andersartig ausgebildet ist (siehe Fig. 7) und auf die bei der Beschreibung des dritten Ausführungsbeispiels näher eingegangen wird.

Figuren 6 und 7 zeigen ein drittes Ausführungsbeispiel, bei dem die äußere Klappe 3 gleichzeitig auch die Funktion der Klappe 10 übernimmt und deshalb größer ausgebildet ist, so dass sie bei geringer Schwenkbewegung auch die Umluftöffnung (in Fig. 6 rechts) verschließen kann, wie in Fig. 6 dargestellt.

Des weiteren weist die innere Klappe 4 zwei Öffnungen 7 auf, welche symmetrisch bezüglich einer Ebene senkrecht zur Schwenkachse in der Mitte der Klappe 4 angeordnet sind. Die Öffnungen weisen zwei gerade, in einem rechten Winkel zueinander angeordnete Seiten 7a auf, wobei eine entsprechend der Seite 7a des ersten Ausführungsbeispiels an einem Rand der Klappe 4 angeordnet ist. Die dritte Seite 7c ist kreisbogenförmig ausgebildet, wobei die beiden dritten Seiten 7c der beiden Öffnungen 7 einen gemeinsamen Mittelpunkt aufweisen, welcher in der Symmetrieebene und etwa am anderen Rand der Klappe 4 liegt.

Ferner weist die innere Klappe 4 eine fest mit derselben verbundene Welle 11 auf, welche in der Schwenkachse 5 liegt und quer durch die Klappe 4 verläuft (siehe Fig. 7). Die durchgehende Welle 11 erhöht die Stabilität der Klappe 4.

### Bezugszeichenliste

- 1: Klappenanordnung
- 2: Gehäuses
- 3: Klappe
- 4: Klappe
- 5: Schwenkachse
- 6: Rand
- 7: Öffnung
- 7a: Seite
- 7b: Eck
- 7c: Seiten
- 10: Klappe
- 11: Welle

## Patentansprüche

1. Klappenanordnung, insbesondere für ein Belüftungssystem eines Kraftfahrzeugs, welche mindestens zwei Klappen (3, 4) mit einem Bereich in Form eines Hohlzylindersektors aufweist, wobei eine erste innere Klappe (4) innerhalb einer zweiten, äußeren Klappe (3) angeordnet ist und die innere Klappe (4) mindestens eine Öffnung (7) in der Mantelfläche des Hohlzylindersektors aufweist, **dadurch gekennzeichnet, dass** die Öffnung (7) mindestens eine in Längsrichtung der inneren Klappe (4) kurvenförmig verlaufende Seite (7c) aufweist.

2. Klappenanordnung nach Anspruch 1, **dadurch gekennzeichnet, dass** die beiden Klappen (3, 4) die gleiche Schwenkachse haben.

3. Klappenanordnung nach einem der vorhergehenden Ansprüche, **dadurch gekennzeichnet, dass** die Öffnung (7) zwei in Längsrichtung der inneren Klappe (4) kurvenförmig verlaufende Seiten (7c) aufweist.

4. Klappenanordnung nach Anspruch 3, **dadurch gekennzeichnet, dass** die kurvenförmig verlaufenden Seiten (7c) kreisbogenförmig ausgebildet sind.

5. Klappenanordnung nach Anspruch 4, **dadurch gekennzeichnet, dass** die Krümmungsmittelpunkte der kreisbogenförmigen Seiten (7c) im in Umfangsrichtung äußeren Bereich des Hohlzylindersektors angeordnet sind.

6. Klappenanordnung nach Anspruch 1 oder 2, **dadurch gekennzeichnet, dass** zwei Öffnungen (7) vorgesehen sind, die je eine kreisbogenförmige Seite (7c) aufweisen, deren Krümmungsmittelpunkte zusammenfallen und im in Umfangsrichtung äußeren Bereich und mittig in Längsrichtung des Hohlzylindersektors angeordnet sind.

7. Klappenanordnung nach einem der vorhergehenden Ansprüche, **dadurch gekennzeichnet, dass** eine Welle vorgesehen ist, die quer durch die innere Klappe (4) verläuft und fest mit derselben verbunden ist, wobei die Welle (11) in der Schwenkachse (5) angeordnet ist.

8. Klappenanordnung nach Anspruch 7, **dadurch gekennzeichnet, dass** die äußere Klappe (3) auf der Welle (11) oder auf, an der inneren Klappe (4) angeordneten Zapfen in der Schwenkachse gelagert ist.

9. Klappenanordnung nach Anspruch 1, **dadurch gekennzeichnet, dass** die äußere Klappe auf einer Welle oder an Zapfen gelagert ist, welche nicht in der Schwenkachse der inneren Klappe liegen.

10. Klappenanordnung nach einem der vorhergehenden Ansprüche, **dadurch gekennzeichnet, dass** die äußere Klappe (3) einen in Umfangsrichtung größeren Hohlzylindersektor aufweist als die innere Klappe (4).

11. Klappenanordnung nach einem der vorhergehenden Ansprüche, **dadurch gekennzeichnet, dass** die Klappenanordnung eine dritte Klappe (10) aufweist.

12. Belüftungssystem oder Klimaanlage eines Kraftfahrzeugs **dadurch gekennzeichnet, dass** das Belüftungssystem oder die Klimaanlage eine Klappenanordnung gemäß einem der Ansprüche 1 bis 11 aufweist.

## Claims

1. Assembly of damper flaps, in particular for a motor vehicle ventilation system, comprising at least two damper flaps (3, 4) with an area in the shape of a hollow cylindrical sector, such that a first, inner flap (4) is arranged within a second, outer flap (3) and the inner flap (4) has at least one opening (7) in the outer surface of the hollow cylindrical sector, **characterised in that** the opening (7) has at least one side (7c) which extends in a curved shape in the longitudinal direction of the inner flap (4).

2. Flap arrangement according to Claim 1, **characterised in that** the two flaps (3, 4) have the same swivel axis.

3. Flap arrangement according to any of the preceding claims, **characterised in that** the opening (7) has two sides (7c) that extend in a curved shape.

4. Flap arrangement according to Claim 3, **characterised in that** the sides (7c) that extend in a curved shape are formed with a circular curvature.

5. Flap arrangement according to Claim 4, **characterised in that** the centres of curvature of the circular- curved sides (7c) are located in the circumferentially outer area of the hollow cylindrical sector.

6. Flap arrangement according to Claims 1 or 2, **characterised in that** two openings (7) are provided, each having a side (7c) of circular curvature, whose centres of curvature coincide and are located in the circumferentially outer area of and centrally in the longitudinal direction of the hollow cylindrical sector.

7. Flap arrangement according to any of the preceding claims, **characterised in that** a shaft is provided, which passes transversely through the inner flap (4) and is attached firmly thereto, the said shaft (11) being arranged along the swivel axis (5).

8. Flap arrangement according to Claim 7, **characterised in that** the outer flap (3) is mounted on the shaft (11) or on pins arranged in line with the swivel axis on the inner flap (4).

9. Flap arrangement according to Claim 1, **characterised in that** the outer flap is mounted on a shaft or on pins not aligned with the swivel axis of the inner flap.

10. Flap arrangement according to any of the preceding claims, **characterised in that** the outer flap (3) has a hollow cylindrical sector which is larger in the circumferential direction than the inner flap (4).

11. Flap arrangement according to any of the preceding claims, **characterised in that** the flap arrangement comprises a third flap (10).

12. Ventilation system or air-conditioner for a motor vehicle, **characterised in that** the ventilation system or air-conditioner comprises a flap arrangement according to any of Claims 1 to 11.

## Revendications

1. Agencement de clapets, en particulier pour un système de ventilation d'un véhicule automobile, qui comporte au moins deux clapets (3, 4) avec une zone en forme de secteur cylindrique creux, un premier clapet intérieur (4) étant monté à l'intérieur d'un deuxième clapet extérieur (3), et le clapet intérieur (4) comportant au moins une ouverture (7) dans la surface latérale du secteur cylindrique creux, **caractérisé en ce que** l'ouverture (7) comporte au moins un côté (7c) courbe dans le sens longitudinal du clapet intérieur (4).

2. Agencement de clapets selon la revendication 1, **caractérisé en ce que** les deux clapets (3, 4) ont le même axe de pivotement.

3. Agencement de clapets selon l'une quelconque des revendications précédentes, **caractérisé en ce que** l'ouverture (7) comporte deux côtés (7c) courbes dans le sens longitudinal du clapet intérieur (4).

4. Agencement de clapets selon la revendication 3, **caractérisé en ce que** les côtés (7c) courbes sont réalisés sous forme d'arc de cercle.

5. Agencement de clapets selon la revendication 4, **caractérisé en ce que** les centres des courbures des côtés (7c) en arc de cercle sont situés dans la zone extérieure dans le sens périphérique du secteur cylindrique creux.

6. Agencement de clapets selon la revendication 1 ou 2, **caractérisé en ce qu'**il est prévu deux ouvertures (7) qui comportent chacune un côté (7c) en forme d'arc de cercle, dont les centres des courbures coïncident et sont situés dans la zone extérieure dans le sens périphérique et au milieu dans le sens longitudinal du secteur cylindrique creux.

7. Agencement de clapets selon l'une quelconque des revendications précédentes, **caractérisé en ce qu'**il est prévu un arbre, qui passe transversalement à travers le clapet intérieur (4) et est relié de manière fixe à ce dernier, l'arbre (11) étant situé dans l'axe de pivotement (5).

8. Agencement de clapets selon la revendication 7, **caractérisé en ce que** le clapet extérieur (3) est monté dans l'axe de pivotement (5) sur l'arbre (11) ou sur des tourillons agencés sur le clapet intérieur (4).

9. Agencement de clapets selon la revendication 1, **caractérisé en ce que** le clapet extérieur est monté sur un arbre ou sur des tourillons qui ne sont pas situés dans l'axe de pivotement du clapet intérieur.

10. Agencement de clapets selon l'une quelconque des revendications précédentes, **caractérisé en ce que** le clapet extérieur (3) comporte un secteur cylindrique creux plus grand dans le sens périphérique que le clapet cylindrique intérieur (4).

11. Agencement de clapets selon l'une quelconque des revendications précédentes, **caractérisé en ce que** l'agencement de clapets comporte un troisième clapet (10).

12. Système de ventilation ou installation de climatisation d'un véhicule automobile, **caractérisé en ce que** le système de ventilation ou l'installation de climatisation comporte un agencement de clapets selon l'une quelconque des revendications 1 à 11.
